Europäisches Patentamt

European Patent Office

Office européen des brevets

(11) Veröffentlichungsnummer : **0 061 563**
B1

# EUROPÄISCHE PATENTSCHRIFT

(45) Veröffentlichungstag der Patentschrift :
26.06.85

(21) Anmeldenummer : 82100298.7

(22) Anmeldetag : 16.01.82

(51) Int. Cl.⁴ : **F 16 K 11/074, E 03 C 1/04**

(54) **Wannenfüll- und Brausebatterie.**

(30) Priorität : 30.03.81 DE 3112615

(43) Veröffentlichungstag der Anmeldung :
06.10.82 Patentblatt 82/40

(45) Bekanntmachung des Hinweises auf die Patenterteilung : 26.06.85 Patentblatt 85/26

(84) Benannte Vertragsstaaten :
AT BE FR GB IT NL

(56) Entgegenhaltungen :
EP-A- 0 010 946
CH-A- 431 410
DE-A- 1.952 710
DE-B- 2 314 853
FR-A- 2 330 933
US-A- 2 528 272
US-A- 3 884 258

(73) Patentinhaber : IDEAL-STANDARD GMBH
Euskirchener Strasse 80
D-5300 Bonn 1 (DE)

(72) Erfinder : Nolden, Werner
Trierer Strasse 33
D-5560 Wittlich (DE) .

EP 0 061 563 B1

**Beschreibung**

Die Erfindung bezieht sich auf eine wandhängende Wannenfüll- und Brausebatterie gemäß dem Oberbegriff des Anspruchs 1. Derartige Batterien sind allgemein bekannt, siehe z. B. DE-B-2 314 853

Mischbatterien für Wannen- und Brausebetrieb sind mit nur manuell zu bedienenden oder sogenannten automatischen Umschaltvorrichtungen ausgestattet. Bei den letzteren ist der Wanneneinlauf abgesperrter Batterie immer freigegeben, so daß beim Öffnen der Batterie ein unerwünschter Betrieb der Brause vermieden wird. Bei den nur manuell bedienbaren Vorrichtungen muß die Umschaltung von Brause- auf Wannenbetrieb in jedem Fall von Hand vorgenommen werden, also auch bei abgesperrter Batterie.

Die Bedienungselemente als zusätzliche Bauteile der bekannten Umschaltvorrichtungen sind in der Regel knopf- oder knebelartig oder ähnlich gestaltet und zieh-, dreh- oder schwenkbar. Bei den bisherigen Umschaltvorrichtungen zeigt die jeweilige Stellung der Bedienungselemente dem Benutzer häufig nur schlecht verständlich oder nicht auffällig genug an, ob der Wanneneinlauf oder die Brause freigegeben ist. Bei den nur manuell zu bedienenden Umschaltvorrichtungen kommt es daher beim Öffnen der Batterie häufig vor, daß versehentlich die Brause in Betrieb ist. Aber auch bei den sogenannten automatischen Umschaltvorrichtungen ist ein ungewollter Brausebetrieb beim Öffnen der Batterie keineswegs ausgeschlossen, da die Automatik nicht immer einwandfrei funktioniert. Dies liegt oft daran, daß die Steuerelemente nach einer gewissen Zeit schwergängiger werden.

Der Erfindung liegt die Aufgabe zugrunde, diese Nachteile zu beseitigen und eine Wannenfüll- und Brausebatterie mit einer Umschaltvorrichtung zu schaffen, die trotz einer einfachen Konstruktion eine sichere Wirkungsweise gewährleistet.

Die Erfindung, wie sie in dem Anspruch 1 gekennzeichnet ist, löst die Aufgabe.

Es versteht sich von selbst, daß bei einer erfindungsgemäßen Batterie vor deren Inbenutzungsnahme wegen der Größe des Wanneneinlaufs dessen jeweilige Position sehr leicht zu erkennen ist, so daß dem Benutzer sofort auffällt und ohne weiteres verständlich ist, in welcher Betriebsstellung sich die Umschaltvorrichtung befindet. Aufgrund des durch den Wanneneinlauf gegebenen relativ langen Hebelarmes für die Betätigung der Umschaltvorrichtung ist ferner die gewünschte Leichtgängigkeit über einen langen Zeitraum sichergestellt. Hinzu kommt, daß eine erfindungsgemäße Konstruktion durch die Verwendung des ohnehin vorhandenen Wanneneinlaufs als Bedienungselement weniger aufwendig ist.

Eine weitere vorteilhafte Ausgestaltung der Erfindung ist im Anspruch 2 beansprucht.

In der Zeichnung ist der Erfindungsgegenstand in einem Ausführungsbeispiel dargestellt; und zwar zeigen:

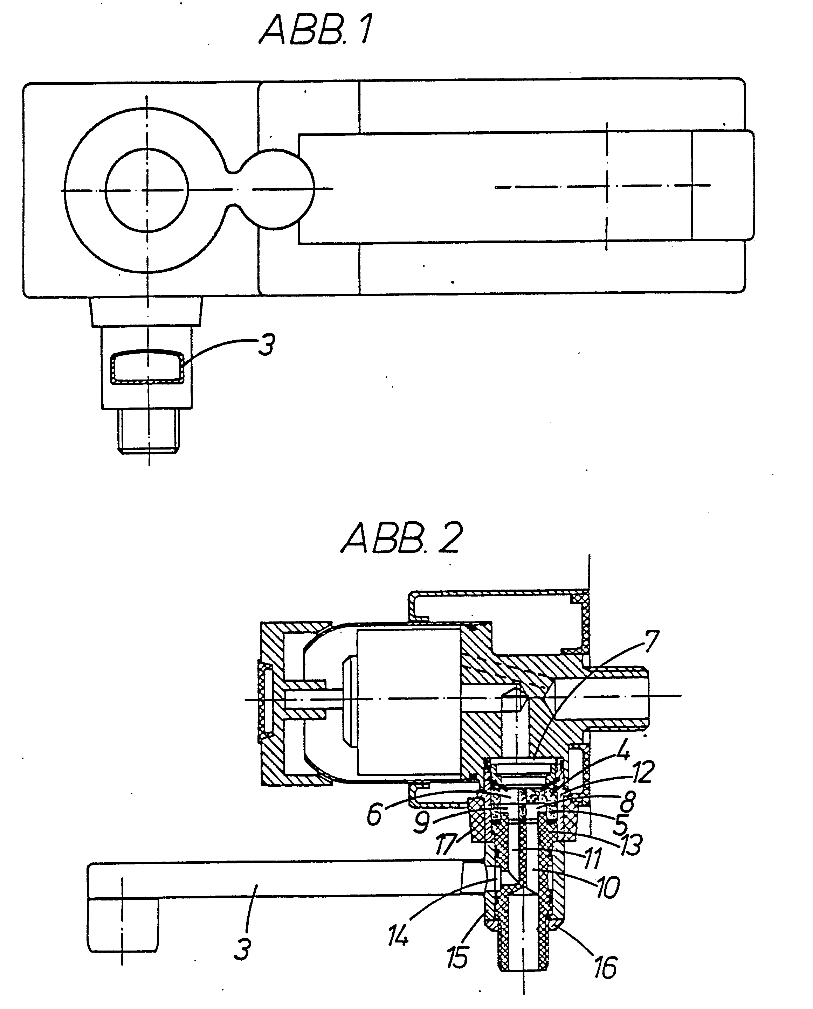

Abb. 1 eine Einhebel-Wannenfüll- und Brausebatterie in der Voransicht und

Abb. 2 die Batterie im Längsschnitt durch die Umschaltvorrichtung.

Darin ist mit 3 ein schwenkbarer Wanneneinlauf bezeichnet, mittels welchem eine Umschaltvorrichtung betätigt wird. Die Umschaltvorrichtung besitzt zwei aufeinanderliegende Steuerscheiben 4 und 5. Eine der Steuerscheiben ist als feststehende Sitzscheibe 4 ausgebildet und weist eine Durchtrittsöffnung 6 auf, die an den Mischwasserabgang 7 der Batterie angeschlossen ist. Die andere Steuerscheibe 5 ist als Ventilscheibe auf der Sitzscheibe 4 drehbar und mit zwei Durchtrittsöffnungen 8 und 9 versehen, die einzeln mit der Durchtrittsöffnung 6 der Sitzscheibe 4 in Überdeckung bringbar sind. Sie münden in je einen Kanal 10 und 11 einer in einem Gehäuseteil 12 der Batterie drehbar gehaltenen Steuerhülse 13. Die Steuerhülse 13 ist an ihrem einen Ende mit der Ventilscheibe 5 fest verbunden und an ihrem anderen Ende über einen (10) der beiden Kanäle 10, 11 an eine nicht dargestellte Brause angeschlossen. In ihrem mittleren Bereich steht sie mit dem schwenkbaren Wanneneinlauf 3 in fester Verbindung, welcher über eine seitliche Austrittsöffnung 14 der Steuerhülse 13 an den anderen Kanal 11 angeschlossen ist.

In der gezeigten Stellung des Wanneneinlaufs 3 überdeckt die Durchtrittsöffnung 6 der Sitzscheibe 4 die in den Kanal 11 mündende Durchtrittsöffnung 9 der Ventilscheibe 5, so daß der Wanneneinlauf 3 freigegeben ist. Wird nun der Wanneneinlauf 3 zur Seite bzw. in Richtung zur Wand verschwenkt, dann wird durch Drehen der Steuerhülse 13 und damit der Ventilscheibe 5 deren andere Durchtrittsöffnung 8 mit der Durchtrittsöffnung 6 der Sitzscheibe 4 in Überdeckung gebracht und die Brause freigegeben. Für die Verbindung der Steuerhülse 13 mit dem Wanneneinlauf 3 ist dieser auf die Steuerhülse 13 aufsteckbar und an seinem entsprechenden Ende 15 hülsenringförmig gestaltet mit einer Innenriffelung, die in eine entsprechende Außenriffelung der Steuerhülse 13 eingreift. In seiner Lage gesichert ist der Wanneneinlauf mittels einer Mutter 16. Mit 17 ist ein Blendring bezeichnet.

Wie bereits erwähnt, ist die dargestellte und beschriebene Ausführung nur ein Beispiel zur Verwirklichung der Erfindung, und diese ist nicht darauf beschränkt, vielmehr sind im Rahmen des erfindungsgemäßen Grundgedankens insbesondere in bezug auf die Anordnung und Gestaltung der einzelnen Bauteile auch noch andere Möglichkeiten gegeben. Es versteht sich insbesondere von selbst, daß auch andere Steuerelemente für die Umschaltvorrichtung Verwendung finden könnten, und daß eine erfindungsgemäße Batterie mit beliebigen Steuerelementen für die Mengen- und Temperaturregelung versehen und selbstverständlich auch als Zweigriff-Batterie ausgeführt sein könnte.

**Patentansprüche**

1. Wandhängende Wannenfüll- und Brausebatterie mit einer Umschaltvorrichtung zur Umschaltung von Wannen- auf Brausebetrieb und einem Wanneneinlauf (3), welcher nebst dem Brauseabgang (10) unten an der Batterie angeordnet ist, dadurch gekennzeichnet, daß der Wanneneinlauf (3) schwenkbar ist und mit der Umschaltvorrichtung in der Weise eine Funktionseinheit bildet, daß die Umschaltung durch Verschwenken des Wanneneinlaufs (3) erfolgt, indem die Umschaltvorrichtung zwei aufeinanderliegende Steuerscheiben (4, 5) besitzt, von denen eine als Sitzscheibe (4) ausgebildet ist und eine Durchtrittsöffnung (6) für den Anschluß an den Mischwasserabgang (7) der Batterie aufweist, während die andere Steuerscheibe (5) als Ventilscheibe auf der Sitzscheibe (4) drehbar und mit zwei Durchtrittsöffnungen (8, 9) versehen ist, die einzeln mit der Durchtrittsöffnung (6) der Sitzscheibe (4) in Überdeckung bringbar sind und in je einen Kanal (10, 11) einer in einem Gehäuse (12) der Batterie drehbar gehaltenen Steuerhülse (13) münden, die an ihrem einen Ende mit der drehbaren Ventilscheibe (5) fest verbunden und an ihrem gegenüberliegenden Ende über einen (10) der beiden Kanäle (10, 11) an eine Brause angeschlossen ist, während sie in ihrem mittleren Bereich mit dem schwenkbaren Wanneneinlauf (3) in fester Verbindung steht, der über eine seitliche Austrittsöffnung (14) der Steuerhülse (13) an den anderen Kanal angeschlossen ist.

2. Wannenfüll- und Brausebatterie mit einer Umschaltvorrichtung gemäß Anspruch 1, dadurch gekennzeichnet, daß der Wanneneinlauf (3) auf die Steuerhülse (13) aufsteckbar ist und hierfür an seinem einen Ende (15) eine hülsenförmige Gestaltung aufweist mit einer Innenriffelung, die in eine entsprechende Außenriffelung der Steuerhülse (13) eingreift.

**Claims**

1. Wall-mounted bath filling- and shower-head assembly with a switch-over device for switching from bath- to shower-operation, and a bath inlet (3), which is arranged together with the shower outlet (10) at the bottom of the assembly, characterised in that the bath inlet (3) is swivellable and forms with the switch-over device a functional unit such that the switch-over takes place by swivelling the bath inlet (3), with the switch-over device having two superimposed control discs (4, 5), one of which is formed as a seat disc (4) and has a throughflow aperture (6) for the connection to the mixed water outlet (7) of the assembly, whilst the other control disc (5) as a valve disc is rotatable on the seat disc (4) and is provided with two throughflow apertures (8, 9), which can be individually brought to overlap with the throughflow aperture (6) of the seat disc (4), and open respectively into a duct (10, 11) of a control sleeve (13) held rotatably in a housing (12) of the assembly, which sleeve is firmly connected at one end to the rotatable valve disc (5) and is connected at its opposite end by means of one (10) of the two ducts (10, 11) to a shower head, whilst in its middle area it is firmly connected to the swivellable bath inlet (3), which is attached *via* a lateral outlet aperture (14) of the control sleeve (13) to the other duct.

2. Bath filling- and shower-head assembly with a switch-over device according to claim 1, characterised in that the bath inlet (3) can be placed onto the control sleeve (13), and has for this purpose at one of its ends (15) a sleeve-shaped construction with inner grooving, which engages into a corresponding outer grooving of the control sleeve (13).

**Revendications**

1. Batterie pour le remplissage d'une baignoire et pour la douche, suspendue à un mur, comprenant un dispositif inverseur pour inverser l'alimentation de la baignoire sur celle de la douche et une tubulure d'alimentation (3) de la baignoire qui est disposée au-dessous, sur la batterie, contre la sortie (10) de la douche, caractérisée en ce que la tubulure d'alimentation (3) de la baignoire forme, avec le dispositif inverseur, une unité fonctionnelle telle que l'inversion s'effectue par pivotement de la tubulure d'alimentation (3) de la baignoire, le dispositif inverseur comprenant deux disques de commande (4, 5) disposés l'un sur l'autre, dont l'un est constitué sous forme de disque-siège (4) comprenant une ouverture de passage (6) pour le raccordement à la sortie d'eau mélangée (7) de la batterie, alors que l'autre disque de commande (5) est monté rotatif en tant que disque-soupape sur le disque-siège (4) et comprend deux ouvertures de passage (8, 9), qui peuvent être amenées individuellement dans une position où elles sont individuellement face à l'ouverture de passage (6) du disque-siège (4) et débouchent dans des canalisations respectives (10, 11) d'un manchon de commande (13) monté de façon rotative dans un logement (12) de la batterie, manchon qui est solidaire, par une extrémité, du disque-soupape rotatif (5) et est raccordé, par son extrémité opposée et par l'intermédiaire de l'une (10) des deux canalisations (10, 11), à une douche, alors qu'il est solidaire, par sa partie centrale, de la tubulure d'alimentation pivotante (3) de la baignoire qui est raccordée à l'autre canalisation par une ouverture de sortie latérale (14) du manchon de commande (13).

2. Batterie pour le remplissage d'une baignoire et pour la douche, à dispositif inverseur, selon la revendication 1, caractérisée en ce que la tubulure d'alimentation (3) de la baignoire peut être enfoncée sur le manchon de commande (13) et présente, dans ce but, à l'une de ses extrémités (15), une forme en manchon comportant une cannelure interne qui coopère avec une cannelure externe correspondante du manchon de commande (13).

## ABB.1

## ABB.2

1